# EUROPEAN PATENT APPLICATION

(11) **EP 1 258 345 A2**
(43) Date of publication of application: **20.11.2002**
(21) Application number: 01402733.8
(22) Date of filing: 16.10.2001
(51) Int. Cl.: B32B 3/20, B32B 3/30

(54) **Laminated decorated board**

(30) Priority: 18.05.2001 JP 2001148789
(71) Applicant: Annaka Factory Co., Ltd, Nakakanbara-gun, Niigata-ken (JP)
(72) Inventor: Shigeru, Annaka, Annaka Factory Co., Ltd, Nakakanbara-gun, Niigata-ken (JP)
(74) Representative: Maillet, Alain

(57) **Abstract**

A laminated decorated board which can give a solid and luxurious feel by laminating a plurality of plate materials, without increasing weight. Plate materials 1 and 2 for constructing a headboard A as a decorated board are laminated to each other. A plurality of sinks 5 are densely formed on an inside surface of the plate material 1, except a peripheral edge thereof. Thus, thin board portions 6 are partially formed by the sinks 5, thereby enabling the thick and solid headboard A to be lightened.

## Description

This invention is related to a laminated decorated board that is used as a decoration panel for furniture, such as a headboard, a backrest or an armrest of a chair, and as well as a door panel and a partition board for use in architectures.

Conventionally, decorated boards used for wooden furniture, such as headboards have been produced by processing a flat plate material. Generally speaking, the thicker these headboards are formed, the more solid and luxurious impression they are able to give, so that the commercial values thereof are enhanced. However, as the thickness of a board increases, the weight thereof inevitably increases, thus causing inconvenience in carrying or processing the same. To solve the problem, so-called flush-structured decorated boards have been proposed in which plywood is laminated to both the front and the back surfaces of a frame-structured core material with a hollow interior formed therebetween. However, if such decorated board is bent in order to define a curved surface, such frame-structured core material will be pealed off and thus it eventually is impossible to bend it to define such a curved surface. Therefore, the above-mentioned flush-structured decorated board is subjected to structural restrictions, as being not suitable for forming a curved surface therein.

The present invention addresses the above-mentioned problems, with the object of providing a thick but lightweight decorated board by laminating plate materials.

According to a first aspect of the present invention, there is provided a laminated decorated board formed by joining flat plate materials together, wherein an inside surface of said plate material is formed with sinks.

By forming sinks in the plate material, the decorated board formed by joining the plate materials is lightened.

According to a second aspect of the present invention, there is provided a laminated decorated board as set forth in the first aspect, wherein two or more sheets of said plate materials are laminated to form said laminated decorated board, and wherein an intermediate plate material other than the two plate materials that construct front and back surfaces of said decorated board is formed with openings, corresponding to said sinks.

With the structure, the thickness of the decorated board can be increased while suppressing the increase of the weight thereof.

Other objects, features and advantages of the invention will become apparent to those skilled in the art, from the following description of the preferred embodiments of the invention, wherein reference is made to the accompanying drawings, in which:
Fig.1 is a rear view showing a plate material in accordance with a first embodiment of the invention.
Fig.2 is a section of a headboard according to the first embodiment of the invention.
Fig.3 is a section of a headboard which is being subjected to a bending process, in which Fig.3 (a) shows the headboard prior to the bending process, while Fig.3 (b) shows the headboard after the bending process, in accordance with a second embodiment of the invention.
Fig.4 is a perspective view showing the headboard which is bent in the vertical direction according to the second embodiment of the invention.
Fig.5 is a perspective view of the headboard which is bent in the lateral direction according to the second embodiment of the invention;
Fig. 6 is a perspective view of the headboard which is concavely bent according to the second embodiment of the invention;
Fig.7 is a perspective view of the headboard which is spherically bent according to the second embodiment of the invention;
Fig.8 is a side view showing a modified headboard with varied curvatures in accordance with the second embodiment of the invention;
Fig.9 is a side view showing a modified headboard which is formed with a straight portion and a curved portion according to the second embodiment of the invention;
Fig.10 is a side view showing the headboard which is bent into a letter " S " configuration according to the embodiment of the invention;
Fig.11 is an exploded perspective view of a headboard according to a third embodiment of the invention;
Fig.12 is a section of the headboard according to the third embodiment of the invention;
Fig. 13 is a section of an modified example of a headboard positioning means according to the invention;
Fig.14 is a view showing an inner face of the headboard of Fig.13;
Fig.15 is an enlarged front view illustrating a state in which a protrusion engages with a longitudinal groove according to the embodiment of the invention.

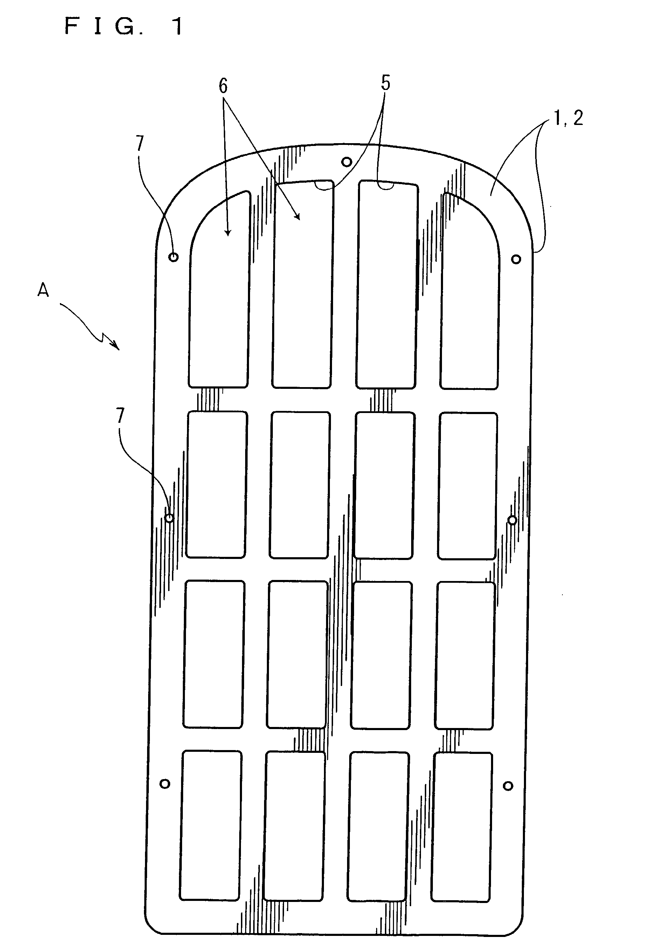

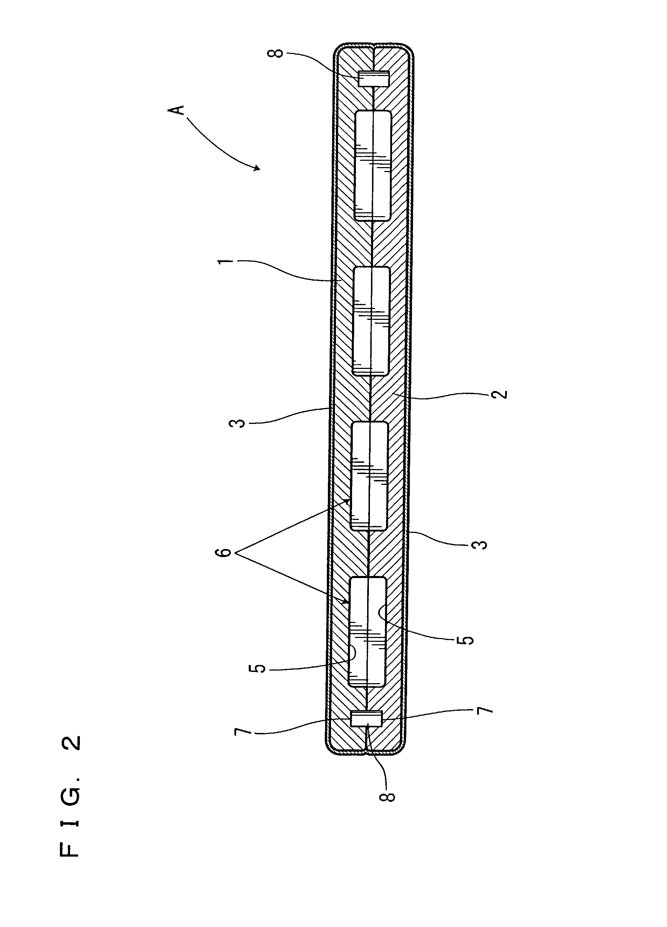

As follows is a description of embodiments of the present invention with reference to the appended drawings. In Figs. 1 and 2 showing a first embodiment of the invention, there is illustrated a headboard A for use in a double-deck bed as an example of a decorated board of the invention. The headboard A is composed of two sheets of plate materials 1 and 2 that are laminated together. These plate materials 1 and 2 are made of woody plate materials, such as plywood, particle board, and MDF (medium density fiberboard), each of the plate materials 1 and 2 being formed flat in the present embodiment. The surfaces of the respective plate materials 1, 2 are each formed with a synthetic resin coating 3 comprised of an adjusted blend of acrylic resin or urethane resin with pigments, coloring agents, anti-abrasion materials, dilution agents and the like.

An adhesive layer (not shown), located between the plate materials 1, 2 is used for bonding these plate materials 1, 2 to each other to form the headboard A. The rear side of each plate material 1, 2 is formed with a plurality of sinks 5 that are disposed mutually close to one another, except a respective peripheral edge thereof, thus forming a thin board portion 6, respectively. Further, the respective plate materials 1, 2 are formed with at least one columnar concave portion 7 opposing to each other, one of which being provided with a positioning pin 8 fitted therein.

After the above bonding process, the plate materials 1, 2 are laminated to each other, by applying pressure thereto, using a press machine or the like. At this moment, each plate material 1, 2 is joined together with the respective plate material 2 and 1, said plate materials being properly positioned by fitting the positioning pin 8 in one of the columnar concave portions 7 into the opposite columnar concave portion 7.

As is apparent from the foregoing, the headboard A is formed by joining the respective plate materials 1 and 2 together, using an adhesive material. Thus, there can be provided a thickened headboard A of a solid and dignified style due to the laminating of the two sheets of the plate materials 1 and 2, thus enhancing the commercial value as a headboard. Further, the plate materials 1 and 2 which construct the headboard A are formed at the rear sides with a plurality of sinks 5, thereby forming the thin board portions 6 in the respective plate materials 1 and 2, whereby the headboard A can be lightened. As a result, when an end user assembles such headboard A, he or she will be able to do so more easily. Furthermore, when joining the respective plate materials 1, 2, it is possible to join them together with the respective materials 2, 1 being precisely positioned relative to each other by the positioning pin 8.

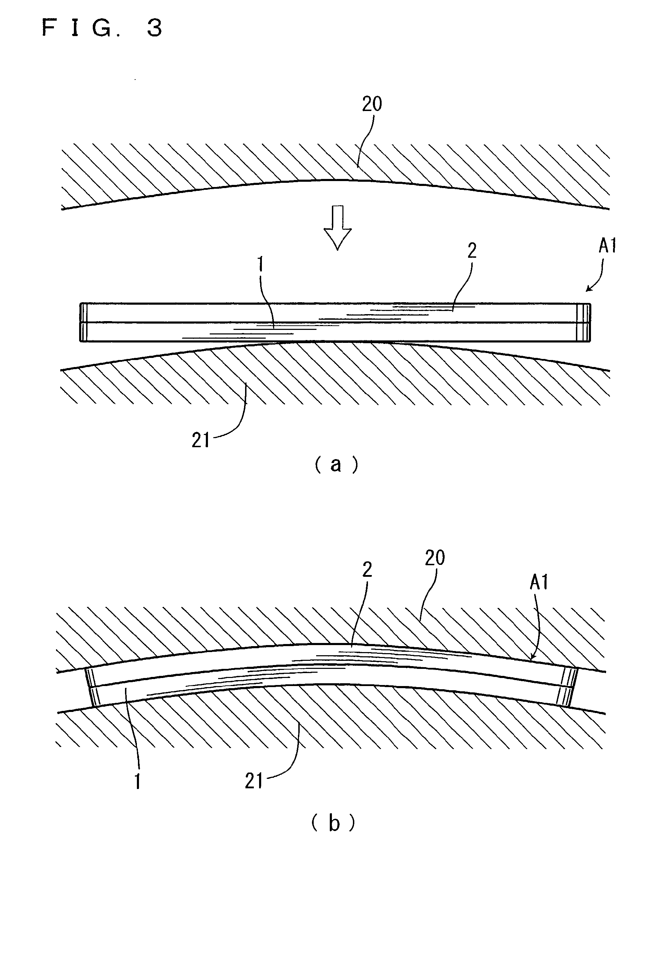

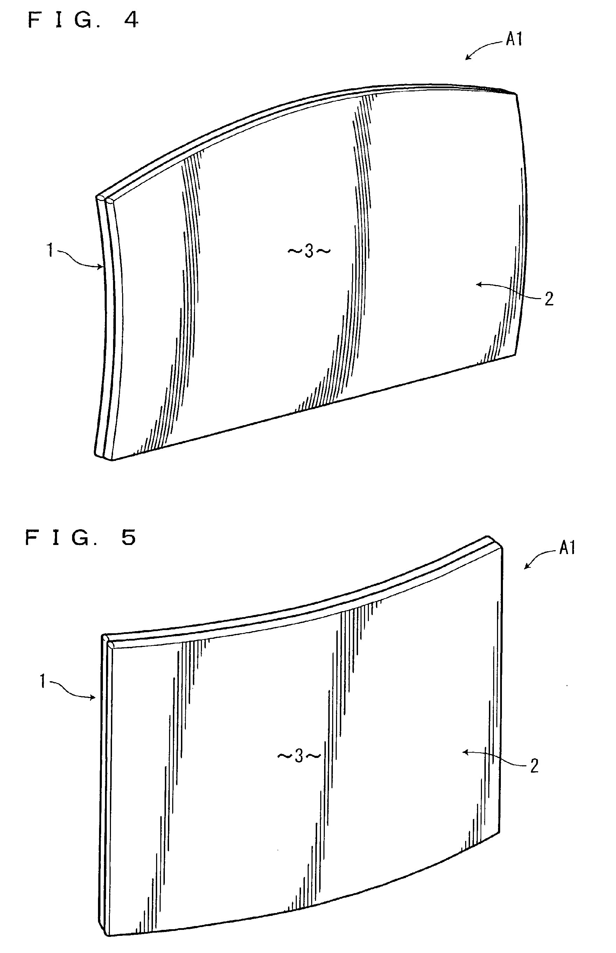

Figs.3 and 4 show a second embodiment of the invention, in which the same portions as those described in the foregoing embodiment will be designated by the same reference numerals, and their repeated detailed descriptions will be omitted.

Whilst the flat headboard A is described in the foregoing embodiment, a bent headboard, specifically a headboard A1 which is bent in the vertical direction is proposed in the present embodiment, said headboard A1 being bent by upper and lower curved dies 20,21, as illustrated in Fig.3.

As such, the headboard A1 of the present embodiment is bent by subjecting the joined two plate materials 1, 2 to a bending process. At this moment, as the inside surface of each plate material 1 and 2 is formed with the thin board portions 6 due to the plural sinks 5, stress developed at the time of the bending process is dispersed as a whole, while the distortion developed during the process can be absorbed by the sinks 5, whereby deflections or curves locally developed in the respective plate materials 1 and 2, even partial peels of the coating layer 3 therefrom can be suppressed. Further, as the headboard A1, formed by laminating the respective plate materials 1 and 2 together, is subjected to the bending process, the headboard A1 with an excellent design can be provided. Moreover, as the respective plate materials 1 and 2 are, although the inside surfaces thereof are formed with the sinks 5, eventually formed into a one-piece structure, there can be provided the headboard A1 which is excellent in strength and easy to assemble.

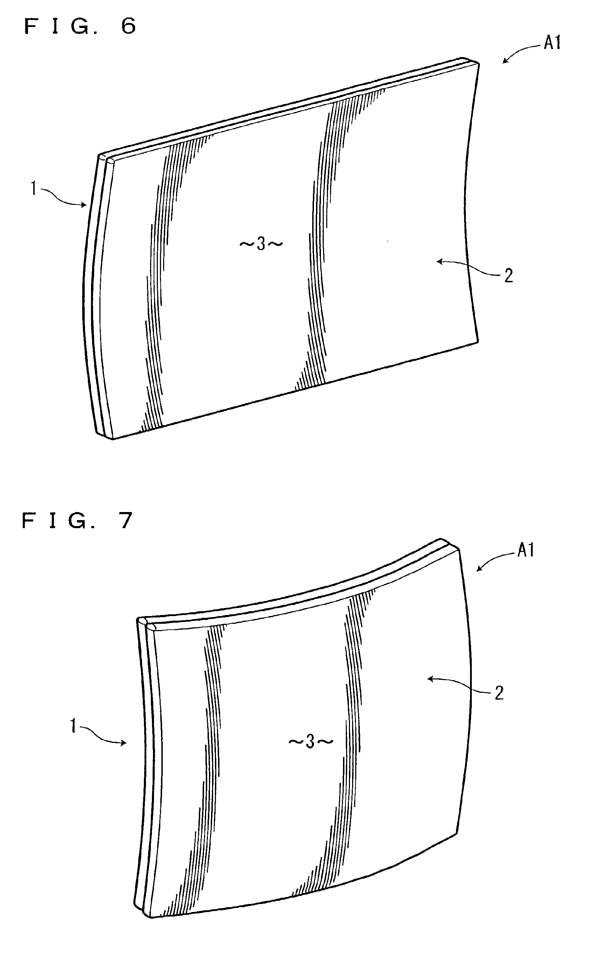

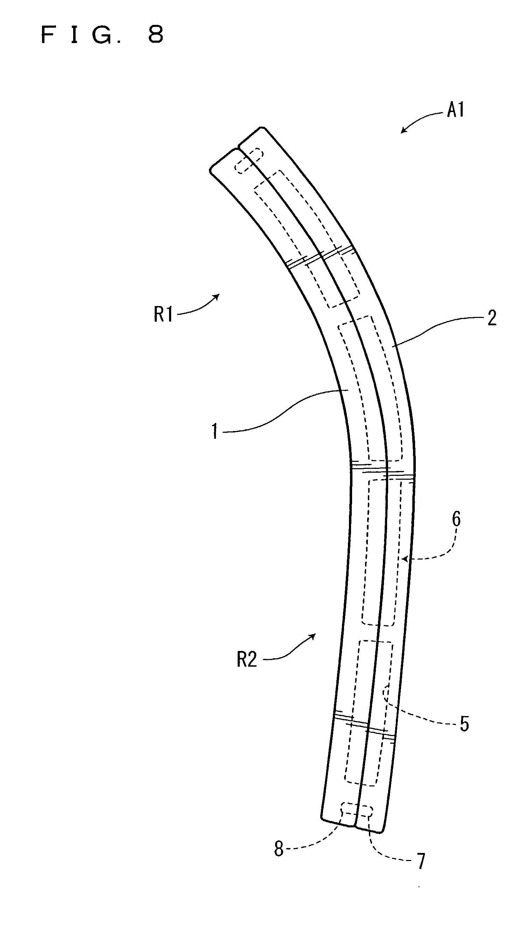

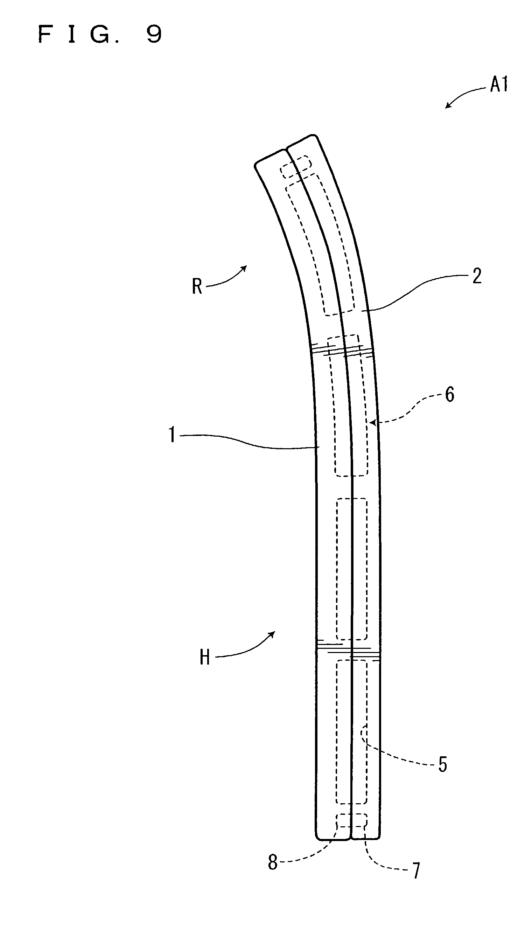

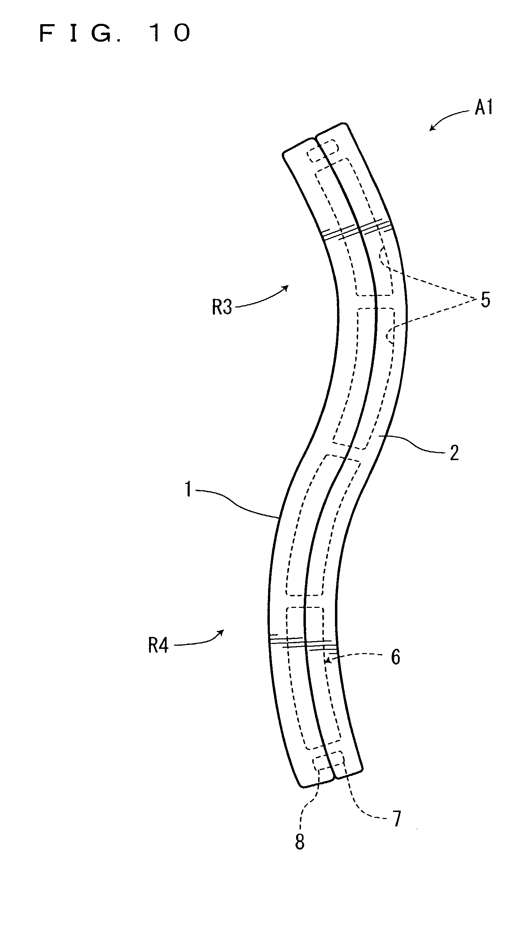

It should be noted that the configuration of the headboard A should not be limited to that as illustrated in Fig.4 in which it is bent in the vertical direction, but may be modified arbitrarily by changing the configuration of the upper and lower dies. For example, the headboard of the embodiment may be bent in the lateral direction, as shown in Fig.5, concavely bent as shown in Fig.6, or spherically bent as shown in Fig.7. Further, the curvature thereof does not always have to be constant, but it may be formed by the combination of different curved surfaces R1 and R2, as shown in Fig.8, the combination of a flat portion H and a curved surface R, as shown in Fig.9, or that of a concavely curved surface R3 and a convexly curved surface R4, as shown in Fig. 10.

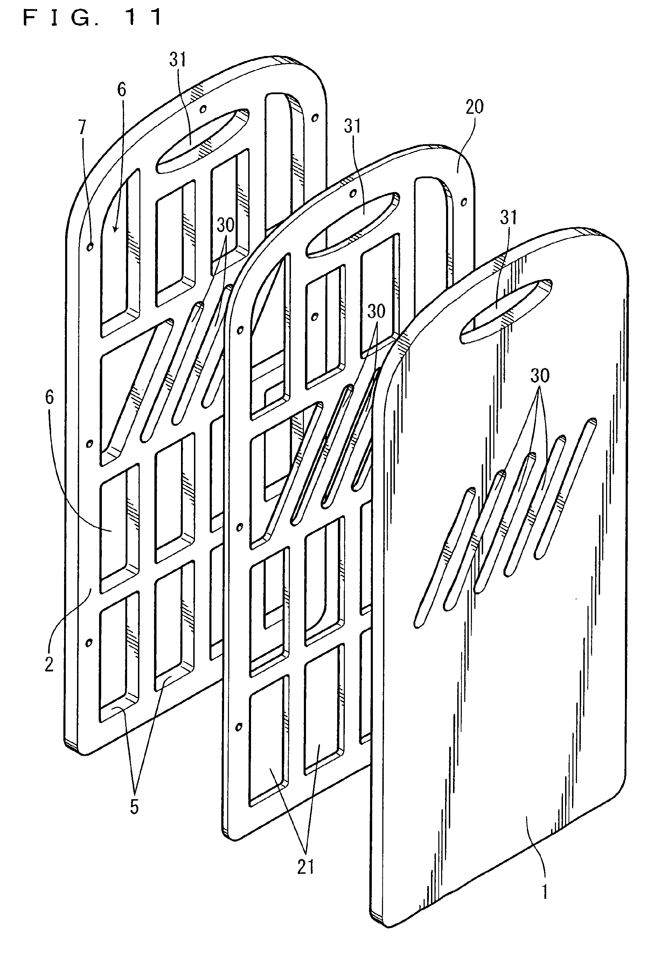

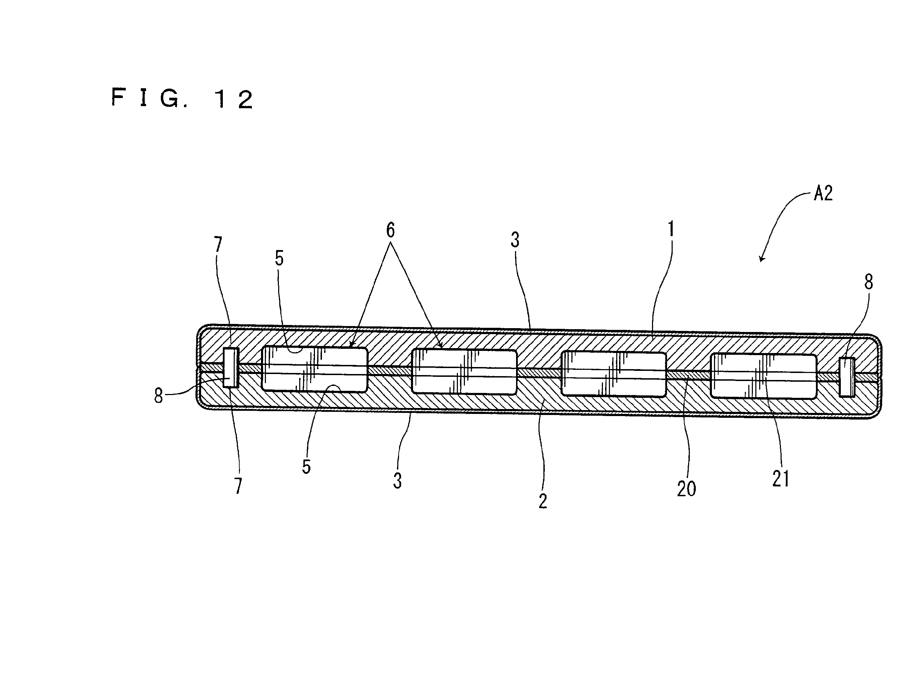

In Figs.11 and 12 showing a third embodiment of the invention, the same portions as those described in the foregoing embodiments will be designated by the same reference numerals, and their repeated detailed descriptions will be omitted.

Whilst two sheets of the plate materials 1 and 2 are laminated to form the headboard A or A1 in the foregoing embodiments, an additional plate material 20 is provided between the plate materials 1 and 2 in the present embodiment so that a three-layered headboard A2 may be provided. The intermediate plate material 20 is formed with openings 21, corresponding to the sinks 5 of the plate materials 1 and 2.

As is apparent from the foregoing, due to the three-layered headboard A2 provided by sandwiching the additional plate material 20 between the plate materials 1 and 2, the thickness of the headboard can be increased, thus giving a more solid and luxurious appearance to the headboard. Further, as the intermediate plate material 20 sandwiched between the plate materials 1 and 2 is formed with the openings 21, corresponding to the sinks 5 of the plate materials 1 and 2, the headboard can be further thickened without increasing the weight thereof so much.

Alternatively, when forming the three-layered headboard A2 by sandwiching the additional plate material 20 between the plate materials 1 and 2, like the present embodiment, the respective plate materials 1, 2 and 20 may be formed with cutouts 30, 31, respectively. Such cutouts 30,31 can provide a kind of an ornamental pattern to enhance the attractiveness of the design of the headboard A2. Additionally, if the intermediate plate 20 is painted in a different color than that of the remaining plate materials 1 and 2, respective colors of the plate materials 1, 2 and 20 are exposed through the cutouts 30, thus providing a headboard with a novel design due to the creation of a unique contrast in color.

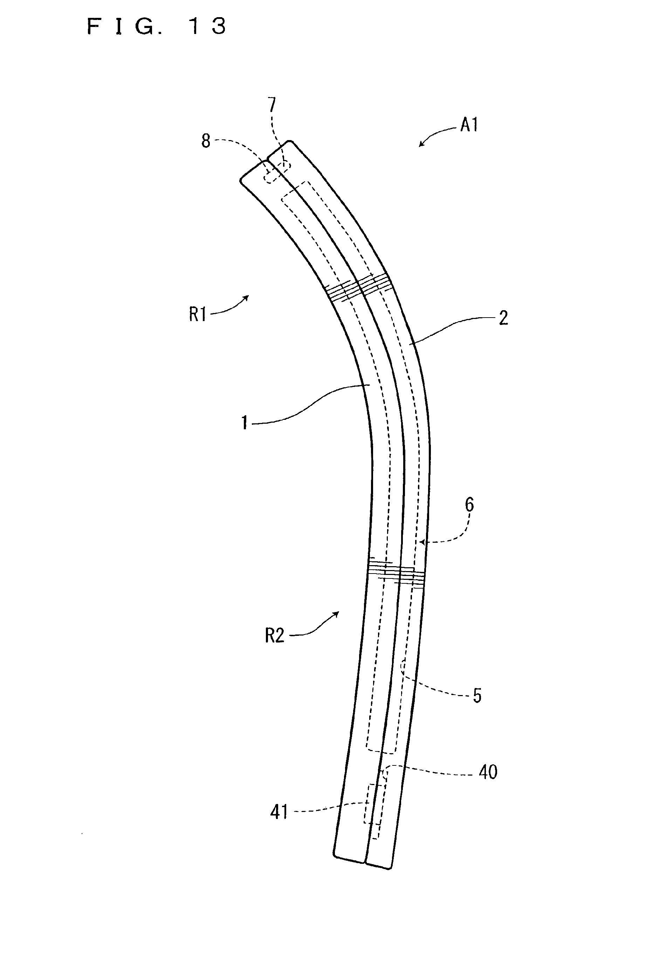

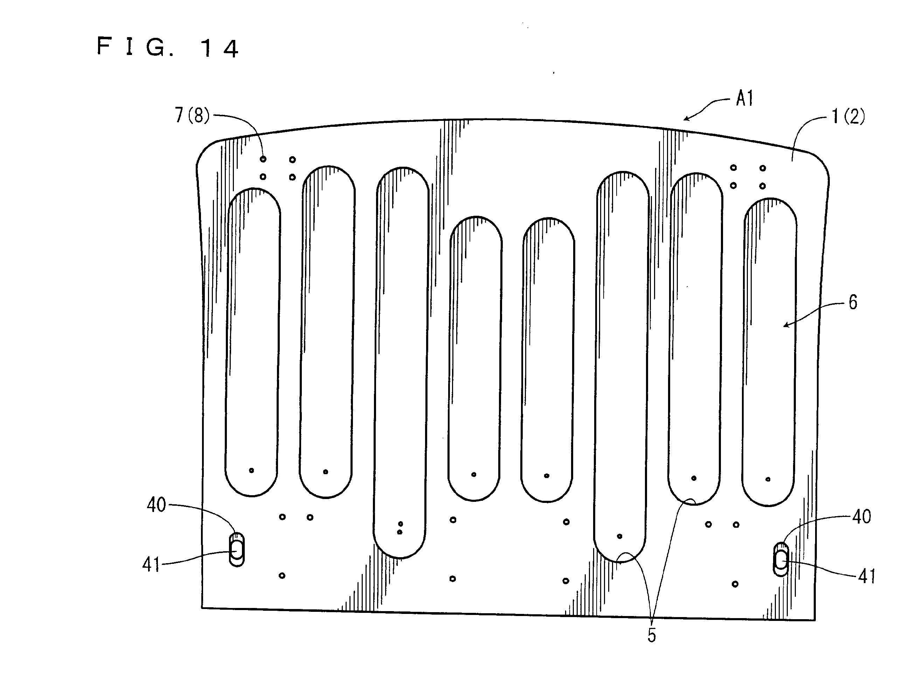

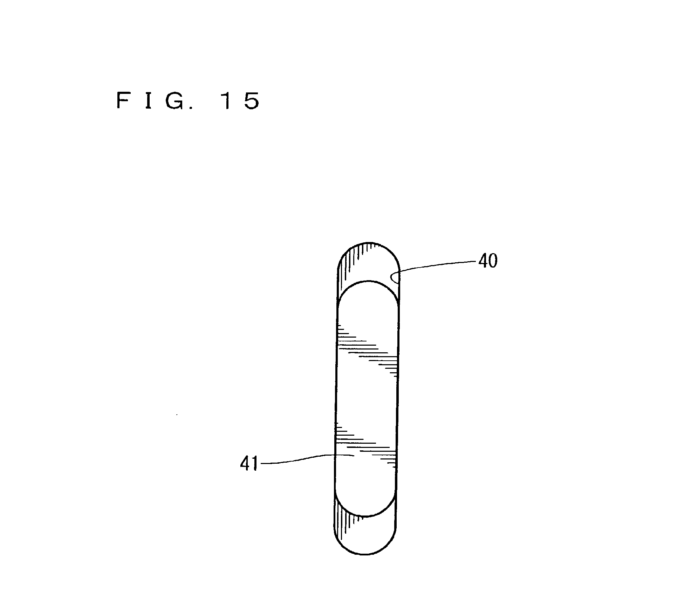

Whilst the plate materials 1 and 2 are mutually positioned by providing the columnar concave portions 7 in the plate materials 1 and 2, and then fitting the positioning pins 8 in the concave portions 7 in the foregone embodiment, it is noted that when forming a headboard to define a curved surface by laminating the plate materials 1 and 2 each other, the difference in radius of curvature between the outer plate material 2 and the inner plate material 1 is getting larger, as the thickness of the headboard A1 increases, and thus a misalignment or total displacement is likely to occur between them. Figs.13 to 15 illustrate a means for preventing such misalignment that is likely to occur when forming a curved surface, wherein the plate materials 1 and 2 are mutually positioned at one end thereof by the engagement between aforesaid concave and convex portions 7, 8 like in the foregoing embodiments, while they are positioned at the other side thereof by longitudinal grooves 40 formed in the plate material 2 and protrusions 41 fixed to the plate material 1, said protrusions 41 being allowed to slide along the grooves 40. By properly positioning the other side of the plate materials 1 and 2, using the longitudinal grooves 40 and the protrusion 41 that slide along the grooves 40, it is possible to absorb the aforesaid possible misalignment caused when the plate materials 1 and 2 are bent, using a press machine or the like, as the protrusions 41 slide along the longitudinal grooves 40.

Incidentally, the present invention should not be limited to the foregoing embodiment, but may be modified within a scope of the invention. For example, a laminated decorated board of the invention is not only applicable to the foregoing headboards, but may apply to other various furniture products, such as backrests or armrests for sofa or chair, front plates for chest, and tables. Further, the invention should not be limited to furniture products, but may apply to various architectural products, such as door panels, room partition plates, etc. The plate materials 1 and 2 may be formed round or formed into any suitable configurations, in response to where they are used.

The invention also relates to a method for forming a laminated decorated board as described hereinbefore, comprising a step of laminating flat plane materials 1 and 2 to each other by using an adhesive. Such a method can advantageously comprise a step of positioning said plate materials 1 and 2 by using positioning means 7, 8 or 40, 41, when said plate materials 1 and 2 are laminated to each other.

## Claims

1. A laminated decorated board constructed by laminating flat plate materials, which comprises one or more sinks formed on an inside surface of each plate material.

2. A laminated decorated board according to claim 1, wherein said laminated decorated board is formed by laminating at least two plate materials for forming front and rear surfaces of said board, and an intermediate plate to be sandwiched therebetween, said intermediate plate material being formed with openings, corresponding to the sinks of said two plate materials.

3. A laminated decorated board according to claim 1, wherein said laminated plate materials are formed with cutouts so that they can provide ornamental patterns in the laminated board.

4. A laminated decorated board according to claim 1, wherein said laminated decorated board is bent.

5. A laminated decorated board according to claim 1, comprising an adhesive layer between said plate materials.

6. A laminated decorated board according to one of the claims 1 to 5, comprising positioning means for positioning said plate materials with respect to each other when said plate materials are laminated to each other.

7. A laminated decorated board according to claim 6, wherein said positioning means comprise concave portions and convex portions which are provided on respective joining surfaces of said plate materials, said convex portions fitting in said concave portions, respectively.

8. A laminated decorated board according to claim 7, wherein said concave portions are longitudinal grooves, while said convex portions are protrusions which are intended to slide along the longitudinal grooves.

9. A laminated decorated board according to claim 6, wherein said decorated board defines two or more points of inflection.

10. A laminated decorated board according to claim 6, wherein said decorated board is a headboard.

11. A method for forming a laminated decorated board according to one of the claims 1 to 10, comprising a step of laminating said flat plane materials to each other by using an adhesive.

12. A method according to claim 11, comprising a step of positioning said plate materials by using positioning means when said plate materials are laminated to each other.
